# EUROPEAN PATENT APPLICATION

(11) **EP 2 000 233 A1**
(43) Date of publication of application: **10.12.2008**
(21) Application number: 08157806.4
(22) Date of filing: 06.06.2008
(51) Int. Cl.: B22C 9/10, B25J 15/00, B25J 15/10

(54) **Method, tool and apparatus for manufacturing castings**

(30) Priority: 08.06.2007 IT TO20070406
(71) Applicant: Global Foundry Systems S.r.l., 10034 Chivasso TO (IT); Mahle Componenti Motori Italia Spa, 10040 La Loggia (TO) (IT)
(72) Inventor: Gaddi, Roberto, 10132 Torino (IT); Zavattaro, Giuseppe, 10092 Beinasco (TO) (IT); Atlhans, Helmuth, 10040 La Loggia (TO) (DE)
(74) Representative: Robba, Pierpaolo

(57) **Abstract**

In the method according to the invention, a ring shaped expendable core is heated and then is oriented by manually placing it onto an orienting support. The core is then taken by a robot (54) that, while transferring the core towards the chill mould, maintains the orientation given to the core by the orienting support. A holding tool (56) is mounted onto the robot and is equipped with spring leaves (72) for seizing the expendable core without deforming or breaking it. An annular projection (70) assists in further containing the thermal deformations of the ring-shaped core before the latter is placed into the mould. Thus quick times can be achieved for the loading cycle, with a reduced number of apparatus stops and a low percentage of expendable cores that are damaged or badly loaded into the chill mould. The apparatus is robust and resistant to the foundry environment. The invention also concerns the core loading tool and apparatus.

## Description

### Field of the invention

The present invention relates to the field of chill casting of articles, such as for instance light alloy pistons for internal combustion engines.

More particularly, the present invention concerns a method, a tool and an apparatus for loading expendable cores into a chill mould. Such expendable cores may be in particular, but not necessarily, ring-shaped salt cores.

### State of the art

A currently known method of manufacturing pistons for internal combustion engines is making such pistons of aluminium or other light alloys by means of chill casting, thereby obtaining the so-called "cast pistons".

Such pistons require a considerable cooling, and thus it is known to form cooling channels on or within them, by introducing one or more rings of a salt (e.g. sodium chloride suitably compacted and prepared) into the chill mould. Such salt rings form expendable cores that, after casting, are dissolved thereby leaving hollow channels inside the cast piston.

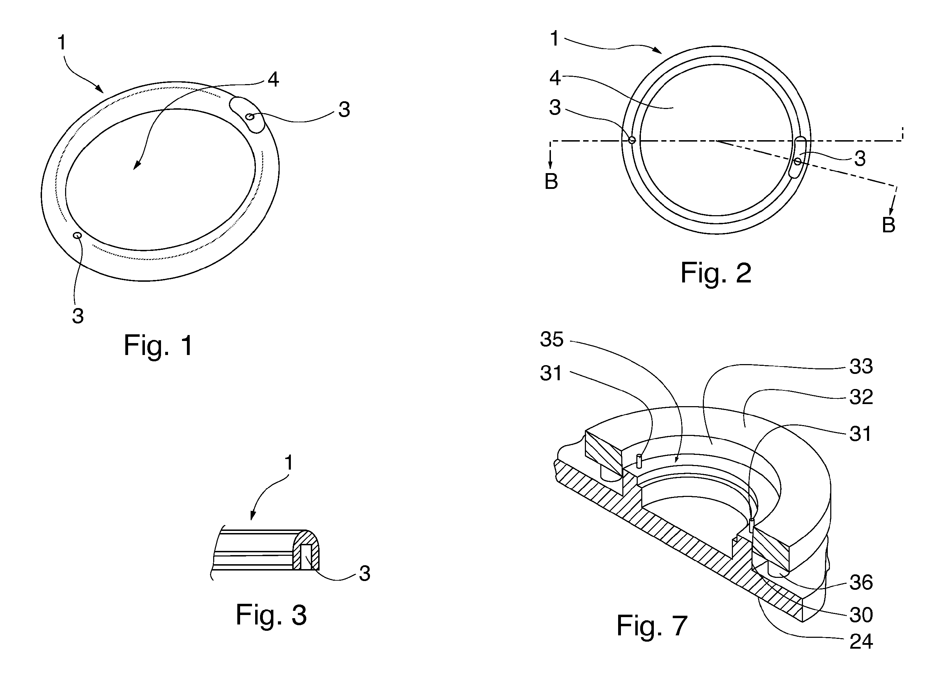

A method currently used for preventing the casting of fluid metal under pressure from displacing the salt core within the mould provides for making salt rings like ring 1 shown in accompanying Figures 1 to 3, i.e. a ring having two positioning holes 3, and for placing such a ring into the chill mould after having heated the ring up to some hundred degrees. Both holes 3 of the salt ring are fitted onto two positioning pegs (not shown) provided in the mould cavity. Because of the shrinkage due to cooling (in case of a ring-shaped core 1 with a diameter of about 50 mm, the thermal shrinkage due to cooling is some tenths of a millimetre), the salt core adheres to the male punch of the mould, the positioning pegs prevent the rotational core movements and generally the salt core is firmly kept in the desired position while molten metal is being injected. Reference numeral 4 in Figs. 1 to 3 denotes the throughhole of ring-shaped salt core 1.

According to a currently known working method, an operator takes the salt ring from the heating furnace, by using protecting gloves and pincers or other manual tools, and places them into the chill mould through a wholly manual operation.

Taking into account the high temperatures of the rings to be handled and of the working environment in general, it might be desirable to automate as much as possible the handling of the heated cores and the introduction thereof into the mould.

The reduced coupling clearances between the positioning pegs on the mould and positioning holes 3 on the cores, the fast size changes due to the cooling of salt cores 1 while they are being introduced into the mould, as well as the relative rigidity and fragility of the cores themselves make however automation of the above operations difficult. Indeed, too slow an introduction of the core into the mould may result in the impossibility of centring holes 3 onto the positioning pegs, since the core shrinks too much because of the excessive cooling. Moreover, during introduction into the mould it is relatively easy to break the salt core, which results in a waste of time and money, in the suspension of the forming cycle or in the risk of performing a casting with a broken salt core, with the consequent need to reject the piston thus obtained.

Italian Patent Application No. T02006A000217 discloses a method, a tool and an apparatus for automating the loading and positioning of salt cores into the mould. Application No. T02006A000217 discloses, among other things, a holding tool having mechanical pincers for seizing and handling ring-shaped salt cores. Always in accordance with Application No. TO2006A000217, such a holding tool can be secured to the wrist of an anthropomorphic robot and can be used by the latter to take ring-shaped salt cores from a heating and orienting station. In such a station, the salt cores, stacked together, are heated in tubular heating furnaces. A salt core is taken from the tubular furnace by seizing it with one of the mechanical pincers and is correctly oriented with the help of a camera before being introduced into the mould.

Such a system allows performing orientation and loading into the mould of the salt cores in automatic manner, with a higher degree of process automation and a higher yield than in the wholly manual loading described above, but it has still some drawbacks.

One of those drawbacks is always the relatively frequent breaking of part of the salt cores when they are seized by the mechanical pincers.

Another drawback is that sometimes the salt cores are anyway introduced into the mould with a wrong orientation.

Further drawbacks detected in systems made in accordance with Application No. TO2006A000217 are as follows:
- the camera, in the foundry environment, becomes dirty, with resulting refraction problems, and works badly;
- relatively more complex software and control systems are needed, in order to be able to manage loading of salt rings of different kinds (working changes).

Thus, the solutions disclosed in Application No. T02006A000217, while generally being an improvement with respect to the wholly manual prior art methods, are however not wholly satisfactory.

It is an object of the present invention to provide an alternative to the prior art methods, tools and apparatuses for loading expendable cores into a chill mould, and in particular to provide an alternative to the methods, tools and apparatuses known from Application No. T02006A000217.

### Summary of the invention

According to a first aspect of the present invention, the above object is achieved by the method of manufacturing castings having the features set forth in claim 1.

According to a particular embodiment, the expendable core is oriented by coupling an orienting portion thereof with a corresponding orienting portion of an orienting support, by mutually engaging the orienting portions in the expendable core and the orienting support through a male-female coupling.

According to a particular embodiment, the method comprises the steps of:
- heating the expendable core;
- limiting thermal deformations, if any, of the expendable core by keeping the latter within a first retaining seat.

According to a particular embodiment, such a method comprises the step of accumulating a plurality of orienting supports in an area of an orienting and heating station, located upstream the heating area, where salt cores waiting to be heated and/or introduced into the chill mould are loaded onto the orienting supports.

According to a particular embodiment, such a method comprises the steps of:
- transferring the heated salt core from the first retaining seat and/or from an orienting support to a second retaining seat;
- limiting thermal deformations, if any, of the expendable core by keeping the latter within the second retaining seat.

According to a particular embodiment of such a method, the expendable core is transferred from the orienting support to the chill mould while keeping the same orientation as that the expendable core has on the orienting support.

According to a particular embodiment, such a method comprises the step of seizing an expendable core by a holding tool, which has holding elements arranged to seize and hold the expendable core by applying a substantially elastic holding force thereto.

According to a particular embodiment, such holding elements include a resilient element chosen from the following group: a spring, a leaf spring, an element of elastomeric material.

According to a particular embodiment, such a method comprises the steps of:
- seizing an expendable core by said holding tool, which has a second retaining seat; and
- introducing the expendable core into the second retaining seat.

According to a particular embodiment, such a method comprises the step of seizing the expendable core by means of the holding elements while the expendable core is being introduced in the second retaining seat.

According to a particular embodiment, such a method comprises the step of limiting the deformations of the expendable core by means of the second retaining seat.

According to a particular embodiment, said holding tool is equipped with an ejector and the method comprises the step of removing an expendable core from the second retaining seat by operating the ejector.

According to a second aspect of the present invention, the above object is achieved by a holding tool having the features set forth in claim 12.

According to a third aspect of the present invention, the above object is achieved by an apparatus having the features set forth in claim 13.

According to a particular embodiment, the loading device of said apparatus is equipped with said holding tool.

According to a particular embodiment, said apparatus includes a heating system arranged to heat the expendable core up to a temperature in the range 0°C to about 800°C, or in the range 0°C to about 600°C or in the range 0°C to about 800°C.

The advantages attainable by the present invention will become more apparent, for a skilled in the art, from the following description of a particular embodiment, given by way of non-limiting example with reference to the accompanying schematic Figures.

### List of the Figures

Fig. 1 is a perspective view of a substantially ring-shaped expendable salt core currently used for manufacturing cast pistons of light alloy;
Fig. 2 is a plan view of the salt core depicted in fig. 1;
Fig. 3 is a detail of the cross-sectional side view, taken along section plane B - B, of the salt core depicted in fig. 1;
Fig. 4 is a plan view of an exemplary embodiment of an apparatus for loading expendable cores into a mould, according to the present invention;
Fig. 5 is a perspective view of the anthropomorphic robot and of a portion of the sliding guides in the loading device and in the orienting and heating station, respectively, of the apparatus depicted in fig. 4;
Fig. 6 is a cross-sectional view, taken along plane C - C, of a pallet of the apparatus depicted in fig. 4;
Fig. 7 is a perspective view, partly in cross-section, of a support for orienting the pallet depicted in fig. 6;
Fig. 8 is a perspective view of the holding tool secured to the wrist of the robot depicted in fig. 5;
Fig. 9 is a cross-sectional front view, taken along plane D - D, of the tool depicted in fig. 8;
Fig. 10 is an exploded view, partly in cross-section, of a holding head of the tool depicted in fig. 8.

### Detailed description

### The apparatus as a whole

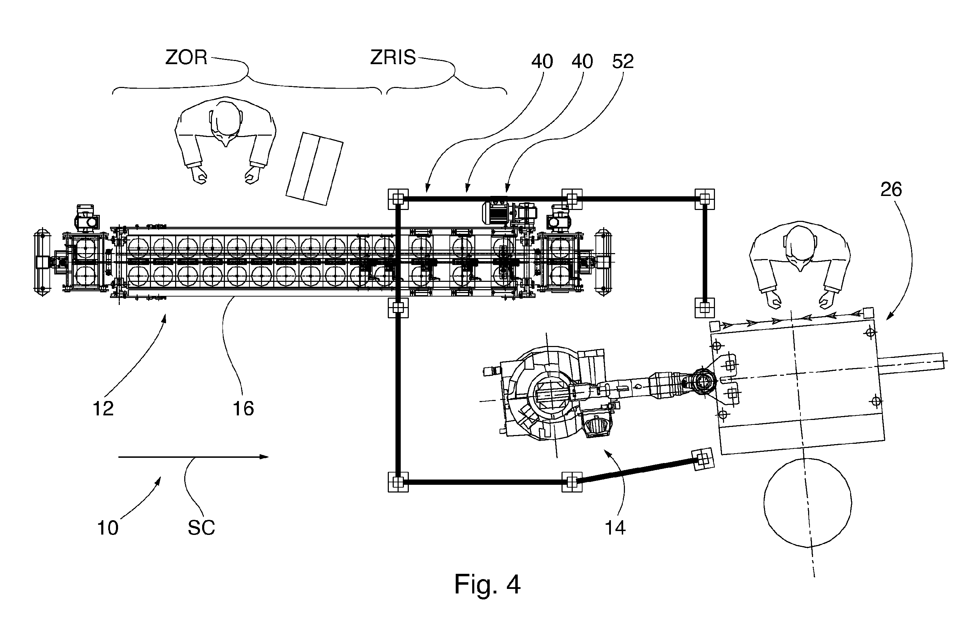

The apparatus for loading expendable cores depicted in Fig. 4 and generally denoted 10 comprises an orienting and heating station, generally denoted 12, and a loading device, generally denoted 14.

Loading device 14 takes salt rings 1, previously heated at station 12, and automatically introduces them into a chill mould, which is mounted on the casting plant 26 (Fig. 4).

Orienting and heating station 12 is now described in more detail.

### The orienting and heating station

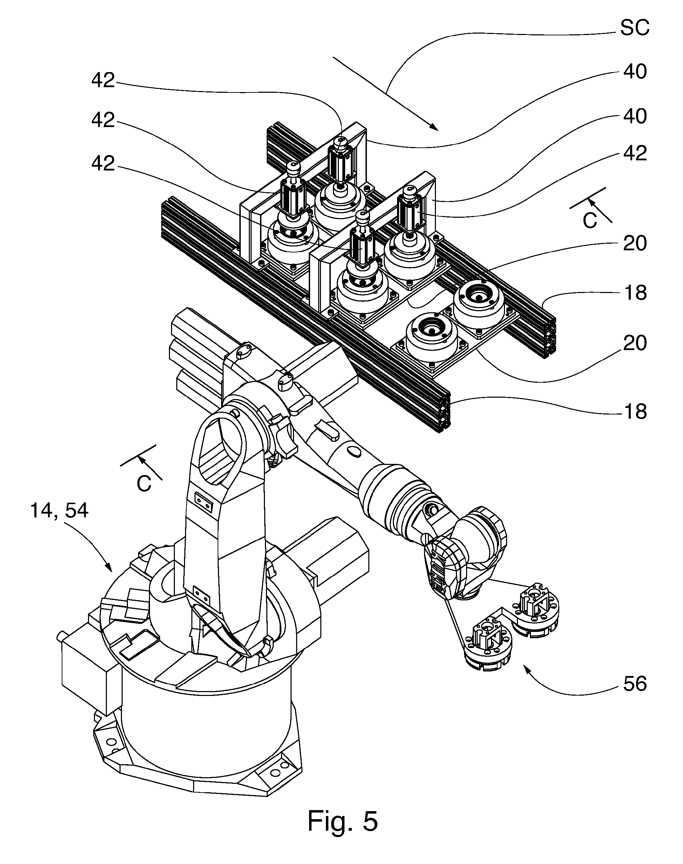

In the present exemplary embodiment, orienting and heating station 12 includes a pallet conveyor 16, including in turn sliding guides 18, known per se and obtained from commercially available section bars, and a plurality of pallets 20 (Fig. 5).

Pallets 20 slide along guides 18 in a sliding direction shown by arrow SC in Figs. 4 and 5, and move from a so-called orienting area ZOR towards a so-called heating area ZRISC (Fig. 4); when in the latter area, pallets 20 are lowered and are brought back to orienting area ZOR by sliding below guides 18 along further guides, not shown, whereby they run along a closed loop path.

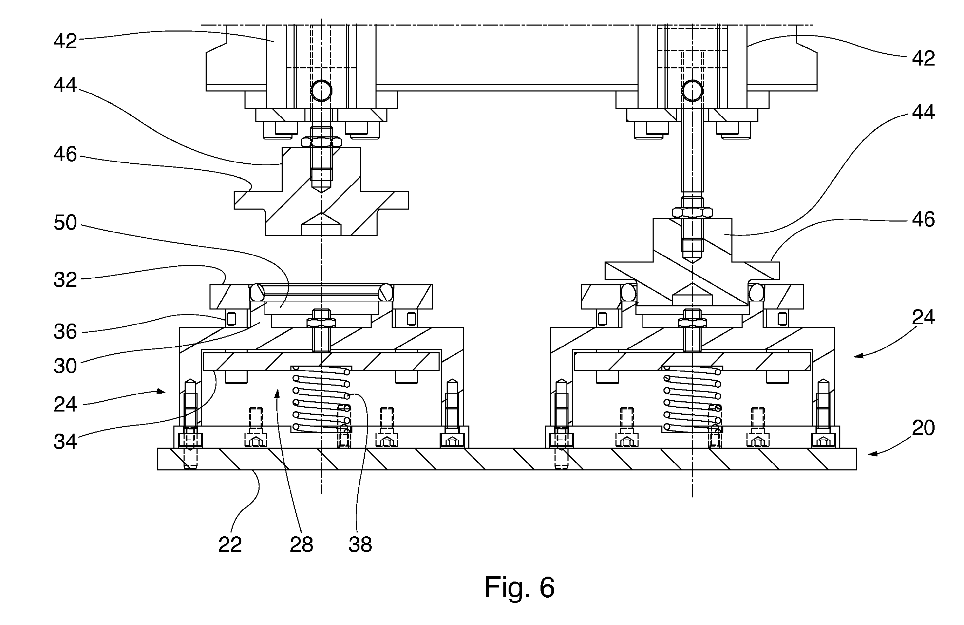

Each pallet 20 has a base 22, which in the present exemplary embodiment is obtained from a metal plate, and two orienting supports 24, secured to base 22 (Fig. 6).

Each orienting support 24 comprises a stationary portion 26 and a moving portion 28. In the present exemplary embodiment, stationary portion 26 is made as a substantially rigid support that is firmly secured to base 22 and that defines, at its top, a male head 30 on which an expendable core, in particular a substantially ring-shaped salt core 1, can be placed. Two reference pegs 31 are provided on male head 30, at such positions that they can fit into positioning holes 3 of expendable core 1.

Moving portion 28 includes instead a female top plate 32, in the present example in the shape of an annular flange, a bottom plate 34 and a plurality of guide pins 36 that connect female top plate 32 and bottom plate 34 together and, by sliding in suitable seats in stationary portion 26, allow moving portion 28 to slide relative to stationary portion 26. Female top plate 32 defines a female seat 33 arranged to fit onto male head 30 and to receive and keep in position an expendable core, in particular a ring-shaped salt core 1. Female seat 33 and male head 30 define a hollow seat 35, herein referred to as "retaining seat 35", also arranged to receive and keep in position an expendable core 1.

In the present exemplary embodiment, moving portion 28 is constantly pushed upwards by a spring 38.

In the present exemplary embodiment, station 12 is equipped, at heating area ZRISC, with a plurality of portal frames 40 (fig. 5). In the present exemplary embodiment, a plurality of actuators 42, in the present example, hydraulic or pneumatic actuators, are secured to frames 40. Each said actuator 42 moves a heating element 44 by lowering and raising it, as it will described in more detail below.

Each heating element has a heating flange 46 and a male portion 48 arranged to penetrate into a corresponding female seat 50 formed on male head 30 of stationary portion 26 of each pallet 20.

In the present exemplary embodiment, orienting and heating station 12 is equipped with two portal frames 40, arranged after one another.

Sliding guides 18 extend upstream heating area ZRISC, in particular upstream portal frames 40, by such an extent that they allow accumulating a number of pallets 20, thereby forming said orienting area ZOR. Advantageously, sliding guides 18 are arranged at such a height that they form a work plane for an operator, e.g. at the height of a conventional worktable or bench. Jointly with an orienting area ZOR allowing accumulating a sufficient number of pallets 20, this allows an operator to easily manually load expendable cores 1 onto pallets 20, without being rigidly linked to the production cadence of the apparatus. Thus, such an operator, besides loading cores 1, also has sufficient time to check, by operating alone, the operation of both orienting and heating station 12 and loading device 14.

The operation of orienting and heating station 12 just described is as follows.

An operator loads ring-shaped salt cores 1 by manually placing them, at ambient temperature, onto pallets 20 located in orienting area ZOR. The operator introduces cores 1 into retaining seats 35, which in this operation phase are formed each by a male head 30 and the corresponding female top plate 32 in raised position, by introducing reference pegs 31 into holes 3 of salt core 1. In this way, the salt core is placed onto pallet 20 with a precise, predetermined orientation.

Pallets 20 proceed along guides 18 as long as they reach heating area ZRISC and heating elements 44 of the first, upstream frame 40 are directly above a predetermined pallet. At this point, said heating elements 44 are lowered onto such pallet, so that male portions 48 are inserted into the corresponding female portions 50 in the concerned pallet.

As shown in Fig. 6, when moving portion 28 of an orienting support 24 is wholly raised, salt core 1 placed into support 24 slightly projects above the top face of the corresponding top plate 32.

When a heating element 44 is lowered onto a pallet 20, flange 46 of heating element 44 is in contact with salt core 1 only.

Suitable force limiting means in actuator 42 stop the stroke thereof when the push of the corresponding heating element 44 attains a predetermined threshold value, so as to prevent the relatively fragile salt core 1 from being damaged. Anyway, even after the stop, actuator 42 continues pushing element 44 against salt core 1 with a suitable force.

Suitable devices, known per se and housed within heating element 44, for instance electrical resistors, produce heat thereby heating salt core 1, mainly by thermal conduction or irradiation, up to a first desired target temperature.

Subsequently, heating elements 44 of upstream portal frame 40 are raised, the concerned pallet moves forward and reaches downstream portal frame 40, where a second heating cycle, similar to that performed in upstream portal frame 40, is performed, so as to bring the temperature of the concerned salt core up to a second predetermined target value, e.g. up to about 350 - 400*C.

When a heating element 44 is completely lowered and introduced into an orienting support 24, heating element 44 compresses the salt ring perpendicularly to the plane of the ring itself. This ensures a more precise planarity, and more generally a better retention of salt core 1 within its seat 35 in orienting support 24, thereby substantially eliminating or considerably limiting deformations salt core 1 would otherwise undergo during heating. Actually, due to the temperatures of some hundred degrees attained during heating, salt core 1 expands and plasticizes inside retaining seat 35, which however always preserves the shape of core 1. Another important contribution to such a retaining function is given by female seat 33 of top plate 32 in each orienting support 24, provided such seat is sized with sufficiently reduced coupling tolerance with respect to expendable core 1.

Once the second heating cycle has ended, heating elements 44 of downstream portal frame 40 are raised, the concerned pallet is moved forward and it reaches taking position 52 (Fig. 4), where loading device 14 takes the heated salt cores in order to load them into the chill mould, as it will be described in more detail below.

### The loading device

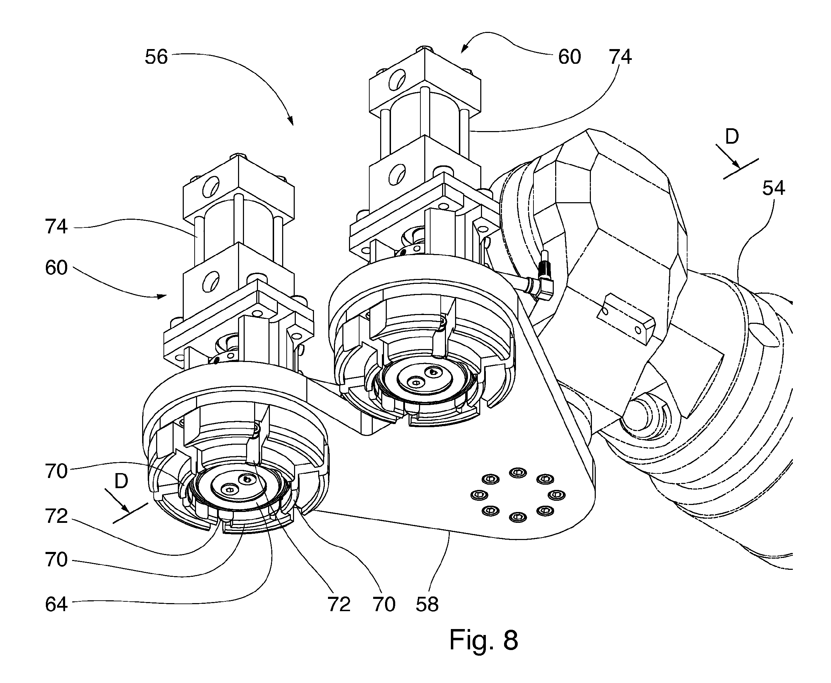

In the present exemplary embodiment, loading device 14 includes an anthropomorphic robot 54 (Fig. 5), the wrist of which has secured thereto a holding tool 56, shown in more detail in Figs. 8 to 10.

In the present exemplary embodiment, holding tool 56 comprises two identical holding heads 60 and a supporting plate 58, which is secured to the wrist of the robot arm and on which both heads 60 are secured.

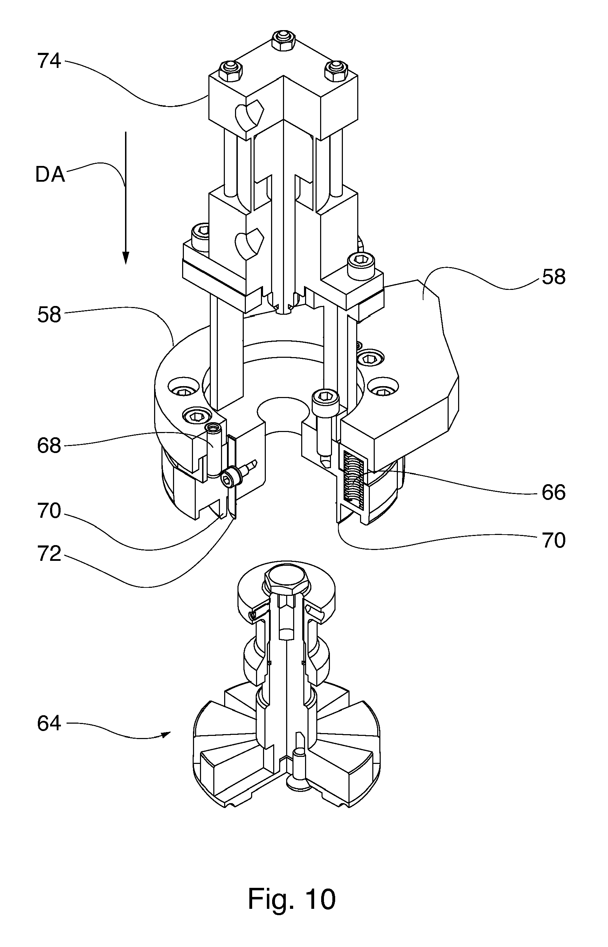

Each holding head 60 has a head body 62 housing a sliding ejector 64, the body and the ejector being shown separate and in exploded view of Fig. 10.

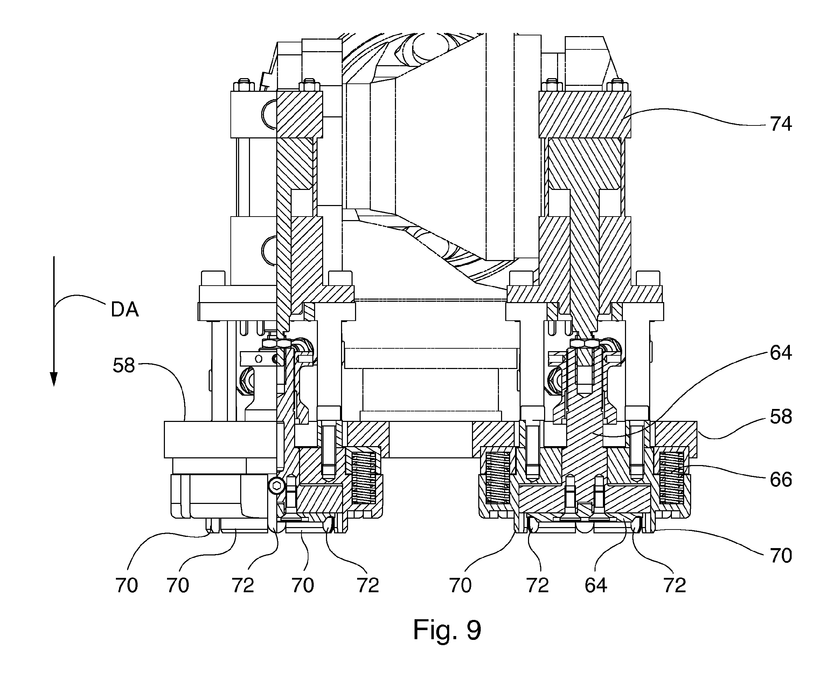

In the present exemplary embodiment, head body 62 is secured to support plate 58 by means of a plurality of recovery springs 66 and a plurality of guide pins or pegs 68. Thanks to springs 66 and pins or pegs 68, the head body 62 is not rigidly fixed onto support plate 58, but it can be displaced to a certain extent relative to said plate along the sliding direction of ejector 64 (arrow DA in Fig. 9) or generally along the predetermined approaching direction of heads 60 to a salt ring 1 to be taken from an orienting support 24 (arrow DA in Fig. 9). This allows at least partly compensating for the tolerances of the different chill moulds, when holding heads 60 place the salt rings thereinto.

Head body 62 has, on its front portion, a holding area that, in the present exemplary embodiment, in turn comprises an annular projection or edge 70 and a plurality of holding elements 72. Annular projection or edge 70 is interrupted at intervals, so as to form a plurality of annular sectors extending around the head of ejector 64. In the present exemplary embodiment, said head is substantially dish shaped.

Holding elements 72, which in the present exemplary embodiment are made of leaf springs of music wire, are located at the areas where annular edge 70 is interrupted and thus they substantially form a crown. Annular edge 70 and the head of ejector 64 define a concave seat 76, herein also referred to as "second retaining seat 76", arranged to receive an expendable core, in particular a salt ring 1 (Fig. 9).

In the present exemplary embodiment, ejector 64 has substantially the shape of an axially symmetrical slide or stem and it can slide longitudinally of head body 62 when operated by a suitable actuator 74, comprising a fluid-operated (pneumatic or hydraulic) cylinder.

An exemplary operation of loading device 14 described above is now described.

At the beginning of a taking cycle, anthropomorphic robot 54 is positioned so that holding heads 60 are located above and coaxially with two respective orienting supports 24 in orienting and heating station 12, each said support having loaded thereon a salt core 1 having ended the previously described heating cycle.

Holding heads 60 are lowered onto orienting supports 24 so that the annular edge of each head 60 lowers female top plate 32 of the respective orienting support 24 and that, at the same time, male head 30 and salt core 1 supported by it are introduced into said concave seat 76 in holding head 60. During such introduction, holding springs 72, arranged to slightly interfere with salt ring 1, are fitted into the latter and retain it by adherence.

Then, by raising the arm of robot 54, holding heads 60 are moved away from the respective orienting supports 24, thereby removing from the supports and holding with themselves salt cores 1. Advantageously, annular edge 70 of each head 60 has such tolerances that it suitably accommodates possible deformations of salt ring 1 due to the cooling while the ring is transferred from heating area ZRISC to the chill mould.

Then, robot 54 places salt cores 1 into the chill mould loaded onto the casting plant 26 (Fig. 4). The robot is so programmed that salt cores 1 are introduced into the chill mould with the same orientation as that previously imposed by reference pegs 31 in orienting supports 24 (Fig. 7): thus salt core 1, during the introduction into the mould, is fitted onto a second pair of centring pegs (not shown) provided in the chill mould and preferably having the same orientation as centring pegs 31 in orienting supports 24. The precision of the robot displacements allows maintaining the salt core orientation imposed by orienting supports 24.

In order to release salt core 1 into the chill mould, actuator 74 is operated and it makes ejector 64 leave the remainder of head body 62: in this manner, ejector 64 pushes the salt core and releases it from the hold of springs 72.

Robot 54 than removes its arm from the chill mould and is available for repeating another loading cycle.

An advantage of the previously described apparatus is the possibility of loading expendable cores, in particular salt cores, into a chill mould with a predetermined and precise orientation, while keeping relatively low the percentage of broken or damaged cores or generally of cores that are not perfectly loaded into the mould, even in case of relatively fragile ring-shaped salt cores and even if such cores are to be fitted onto reference pegs in the mould with centring tolerances of few tenths of a millimetre. As an indication, and based on experimental tests, it is believed that an apparatus according to the present invention allows keeping the percentage of ring-shaped salt cores broken or incorrectly loaded into the mould below 5%, whilst the current wholly manual methods result in a percentage of broken or incorrectly loaded ring-shaped salt cores of about 20%. The previously described apparatus results in the above loading efficiency notwithstanding the need to preheat the salt cores to some hundred degrees.

Moreover, by the apparatus according to the present invention, higher loading throughputs can be obtained than by a wholly manually mould loading, with a substantially unchanged percentage of broken, damaged or incorrectly loaded salt cores.

As an indication, in case of wholly manual loading operations, where an operator manually took, oriented and placed the salt rings into the chill mould, cycle times of about 30 s were obtained, whilst by using apparatus 10 described above cycle times of about 10 s were obtained.

A feature that is believed to assist in limiting the percentage of broken expendable cores is the use, for seizing the salt core, of holding elements 72 in place for instance of relatively rigid mechanical fingers operated by actuators. Actually, it appears for instance that often a ring-shaped salt core grasped by the mechanical fingers of the apparatus disclosed in Italian Patent Application No. T02006A000217 slips out, moves or is deformed or crumbled by the fingers themselves. On the contrary, it appears that holding springs, or other holding elements, 72, better fit to the salt cores when holding them.

Thanks to the absence of cameras or other delicate visual control systems, the previously described apparatus is more robust and resistant to the aggressive environment existing in a foundry, is less subjected to apparatus stops and requires a reduced maintenance: Such an apparatus is moreover simpler, more reliable and cheaper.

Several modifications and variations can be made to the exemplary embodiments described above may undergo without departing from the scope of the present invention.

For instance, loading device 14 can include a Cartesian robot in place of an anthropomorphic one, or still other taking and loading mechanical devices. Holding tool 56 can be equipped with a number of holding heads 60 even different from two, and more particularly it may include only one, four or clearly yet another number of holding heads. Holding elements 72 need not to be made by leaf springs, but clearly they can be made in different ways, e.g. they may be elements of elastomeric materials, mechanical fingers, hooks, balls or articulated pins contrasted by springs. Moreover, such mechanical elements can seize a flattened expendable core not only from the outside while pressing it perpendicularly to the core plane, as shown in the embodiment of Figs. 8 to 10, but they can also seize the core from the inside and/or press it in different directions. Furthermore, one or more than one holding element 72 can be provided in each holding tool 56, or in each holding head 60. The coupling of holes 3 in expendable core 1 with pegs 31 in orienting supports 24 can be replaced by other kinds of male-female couplings, for instance projection - indentation.

The examples and the lists of possible variations in the present application are to be intended as non-exhaustive lists.

## Claims

1. A method of manufacturing castings, comprising the following steps:
- orienting an expendable core (1);
- placing the oriented expendable core (1) into a chill mould, by means of a mechanical loading device (14).

2. The method as claimed in claim 1, comprising the following steps:
- manually orienting an expendable core (1);
- placing the oriented expendable core (1) into a chill mould, by means of a mechanical loading device (14).

3. The method as claimed in claim 1 or 2, wherein the expendable core (1) is oriented by coupling an orienting portion (3) thereof with a corresponding orienting portion (31) of an orienting support (24), by mutually engaging the orienting portions (3, 31) of the expendable core (1) and the orienting support (24) with a male-female coupling.

4. The method as claimed in one or more of the previous claims, comprising the steps of:
- heating the expendable core (1);
- limiting the thermal deformations, if any, of the expendable core (1) by retaining the latter within a first retaining seat (35).

5. The method as claimed in one or more of the previous claims, comprising the steps of:
- heating the expendable core (1), wherein the expendable core has a substantially flattened shape;
- limiting the thermal deformations, if any, of the expendable core (1) by pressing the latter in a direction perpendicular or transversal to the plane of the expendable core (1).

6. The method as claimed in one or more of the previous claims, comprising the step of loading the expendable core (1) onto an orienting support (24) located at a height not exceeding 1.8 m above the floor on which the operator in charge of loading the expendable core onto said support (24) stands, and preferably at an height from 0.9 m to 1.5 m above the floor on which the operator in charge of loading the expendable core onto said support (24) stands.

7. The method as claimed in one or more of the previous claims, wherein the mechanical loading device (14) includes an element chosen from the following group: a mechanical arm, an arm of an articulated robot, an arm of an anthropomorphic robot, a Cartesian robot.

8. The method as claimed in one or more of the previous claims, comprising the step of seizing an expendable core (1) by means of a holding tool (56), which is equipped with holding elements (72) arranged to seize and hold the expendable core (1) by applying a substantially elastic holding force thereto.

9. The method as claimed in one or more of the previous claims, wherein the expendable core (1) is substantially ring shaped.

10. The method as claimed in one or more of the previous claims, wherein the expendable core (1) is equipped with an orienting portion in turn including an element chosen from the following group: a hole (3), a hollow, a projection.

11. The method as claimed in one or more of the previous claims, wherein the expendable core (1) is made of, or is based on one of the following materials:
- a salt;
- sodium chloride.

12. A holding tool (56) for handling expendable cores (1), comprising a holding element (72) arranged to seize and hold the expendable core (1) by applying a substantially elastic holding force thereto.

13. An apparatus (10) arranged to perform the method as claimed in any of claims 1 to 11.

14. The apparatus as claimed in claim 13, including a mechanical loading device (14) arranged to place the expendable core (1) into a chill mould.

15. The apparatus as claimed in claim 13 or 14, including:
- an orienting support (24), arranged to engage an expendable core (1) by forming a male-female coupling in correspondence of a predetermined orientation of the expendable core (1);
- a mechanical loading device (14) arranged to transfer the expendable core (1) from the orienting support (24) to a chill mould.
